# EUROPÄISCHE PATENTSCHRIFT

(11) **EP 2 657 547 B1**
(45) Veröffentlichungstag und Bekanntmachung des Hinweises auf die Patenterteilung: **02.04.2014**
(21) Anmeldenummer: 12165334.9
(22) Anmeldetag: 24.04.2012
(51) Int. Cl.: F16B 25/00

(54) **Schraube**
Screw
Vis

(43) Veröffentlichungstag der Anmeldung: 30.10.2013
(73) Patentinhaber: Nedschroef Fraulautern GmbH, 66740 Saarlouis (DE)
(72) Erfinder: Wendels, Jörg Michael, 66292 Riegelsberg (DE); Egele, Jean Joseph, 66386 St. Ingbert (DE)
(74) Vertreter: Dörner, Kötter & Kollegen

(56) Entgegenhaltungen:
- EP-B1- 0 987 452
- DE-A1- 10 243 537

## Beschreibung

Die Erfindung betrifft eine gewindefurchende Schraube, bestehend aus einem niedrigfesten Nichteisenwerkstoff, mit einem Schraubenkörper, der zumindest bereichsweise mit einer Beschichtung versehen ist.

Derartige gewindefurchende Schrauben sind regelmäßig aus einem Stahlwerkstoff hergestellt. Dabei ist es bekannt, die oberflächennahe Schicht des gewindetragenden Schraubenkörpers durch eine Einsatzhärtung oder auch durch Nitrierung zu härten.

Insbesondere im Bereich der Automobilindustrie besteht die Anforderung, bei allen Bauteilen, und somit auch bei Schrauben, deren Gewicht auf ein Minimum zu reduzieren. Aus der EP 0 987 452 B1 ist eine Furchschraube bekannt, die aus einem niedrigfesten Nichteisenwerkstoff besteht. Der das selbstfurchende Gewindetragende Schaftbereich ist mit einer Hartschicht überzogen, die eine größere Härte aufweist, als der Schraubenwerkstoff. Dabei ist eine Kunststoffschraube offenbart, die mit einer Metallschicht versehen ist. Weiterhin wird vorgeschlagen metallische Schrauben, die aus Aluminium oder Magnesium bestehen, durch Oberflächenmodifikation oder auch durch Aufbringen einer Schicht aus einem anderen Material, beispielsweise durch thermisches Spritzen PVD oder CVD zu erzielen. Bei der Beschichtung von Schrauben aus einem Nichteisenmetall, insbesondere aus einem Aluminiumwerkstoff, der ein sehr geringes spezifisches Gewicht aufweist, besteht jedoch die Problematik, dass beim Aufbringen einer derartigen harten Schicht, beispielsweise auch in Form einer glaskeramischen Schicht, hohe Härtetemperaturen erforderlich sind, welche das Gefüge des Schraubenwerkstoffs negativ beeinflussen können.

Hier will die Erfindung Abhilfe schaffen. Der Erfindung liegt die Aufgabe zu Grunde, eine gewindefurchende Schraube zu schaffen, die aus einem leichten Nichteisenwerkstoff gebildet ist und bei der die vorgenannten Nachteile vermieden sind.

Gemäß der Erfindung wird diese Aufgabe durch eine Schraube mit den Merkmalen des kennzeichnenden Teils des Patentanspruchs 1 gelöst. Durch die Ausbildung der Beschichtung aus einem mit Füllstoffen angereicherten Elastomer oder Polymerwerkstoff ist eine Beschichtung bei niedrigen Temperaturen ermöglicht.

Weiterbildungen und Ausgestaltungen der Erfindung sind in den Unteransprüchen angegeben.

In Weiterbildung der Erfindung weist der Schraubenkörper einen trilobularen Querschnitt auf. Durch das trilobulare Gewinde ist eine Selbsthemmung der gewindefurchenden Schraube bewirkt.

Bevorzugt ist der Schraubenwerkstoff Aluminium oder Magnesium oder eine Legierung einer dieser Werkstoffe. Hierdurch ist eine besonders leichte Schraube erzielt. Darüber hinaus sind derartige Materialien weniger korrosiv, sodass die von Stahlschrauben bekannten Probleme vermieden sind. Alternativ kann die Schraube auch aus Kupfer hergestellt sein.

In weiterer Ausgestaltung der Erfindung ist die Beschichtung aus einem Nanokompositwerkstoff gebildet. Hierbei handelt es sich um Werkstoffe mit einer vorzugsweise polymerartigen Matrix, welche mit anorganischen Nanopartikeln versehen sind. Überraschend hat sich gezeigt, dass bei der Verwendung von Nanokompositwerkstoffen sehr gute Schraubeneigenschaften erzielt werden können, auch wenn die Beschichtung eine geringere Härte aufweist, als der Schraubenwerkstoff. Durch den Zusatz von Nanofüllstoffen bzw. -additiven, ist es möglich, die Zähigkeit und die Festigkeit eines Polymers gleichzeitig zu erhöhen. Neben der Möglichkeit der thermischen Härtung, die bei Temperaturen in der Größenordnung von 250° erfolgen kann, lassen sich über die Verwendung polymerisierbarer organischer Gruppen niedrigere Temperaturen anwenden. Beispielsweise kann die Härtung photochemisch erfolgen. Beispielsweise durch den Einsatz von Kondensationskatalysatoren ist sogar eine Aushärtung der Beschichtung bei Zimmertemperatur ermöglicht.

Vorzugsweise ist der Nanokompositwerkstoff ein Acrylat- oder Silicatkompositwerkstoff. Es wurden jedoch auch vielversprechende Ergebnisse durch die Verwendung von Ton- Nanomerplättchen erzielt. Weitere geeignete Nanofüllstoffe zur Einstellung der Eigenschaften der Beschichtung sind dem Fachmann bekannt.

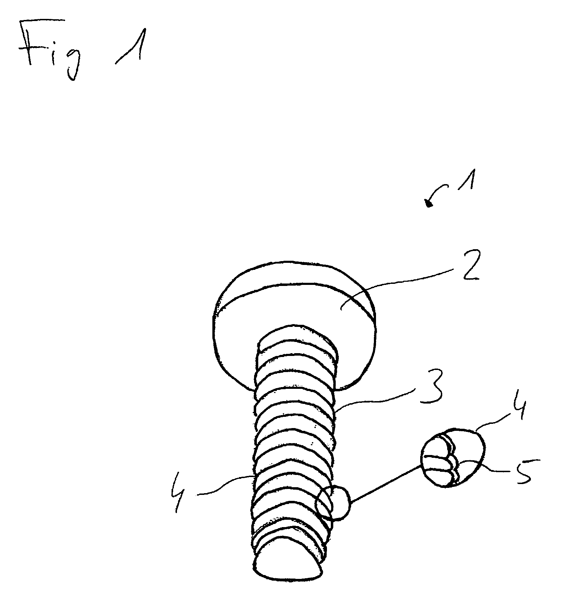

Ein Ausführungsbeispiel der Erfindung ist in der Zeichnung dargestellt und wird nachfolgend im Einzelnen beschrieben. Die einzige Figur 1 zeigt die schematische Darstellung einer trilobularen gewindefurchenden Schraube.

Die als Ausführungsbeispiel gewählte Schraube 1 besteht aus einem Schraubenkopf 2 sowie einem an diesen angeformten Schraubenkörper 3, der mit einem trilobularen Gewinde 4 versehen ist. Der Schraubenkörper 3 ist mit einer Beschichtung 5 versehen, welche durch einen Nanokompositwerkstoff gebildet ist. Dieser Nanokompositwerkstoff ist vorliegend auf Basis eines Polyuretans hergestellt, welches aus zwei Polymer-Komponeten zusammengesetzt ist, denen Tonplättchen in Nanogröße beigegeben sind. Ergebnis ist eine sehr steife, widerstandsfähige Schicht, welche zugleich eine gute Dehnbarkeit aufweist. Im Ausführungsbeispiel beträgt die Dicke der Beschichtung 6 µm. Allgemein haben sich Schichtdicken zwischen 2 µm und 20 µm als vorteilhaft erwiesen. Selbstverständlich können die Nanopartikel auch andere Formen wie beispielsweise eine Kugel- oder Röhrchenform aufweisen.

Durch die Verwendung anderer anorganischer Nanopartikel als Additiv sowie durch Verwendung anderer polymerartiger Matrizen ist je nach Einsatzgebiet der gewindefurchenden Schraube die Eigenschaft der Beschichtung einstellbar. Beispielsweise ist so eine Widerstandsfähigkeit gegenüber hohen Temperaturen oder auch gegenüber Säure erzielbar.

Ein Schraube der zuvor beschriebenen Art wird im Ausführungsbeispiel in ein mit einem Bohrloch versehenes Bauteil aus Magnesium eingeschraubt, wobei die Schraube sich ihr Gewinde selbst furcht. Durch die erfindungsgemäße Beschichtung, insbesondere unter Einsatz eines Nanokompositwerkstoffs für die Beschichtung, ist die durch die Schraube aufnehmbare Flächenpressung deutlich erhöht, wodurch ein Gewindefurchen mittels der Aluminiumschraube trotz der Härte des Magnesiumwerkstoffs möglich ist. Dabei hat sich gezeigt, dass die Beschichtung zugleich einen Gleiteffekt aufweist, wodurch der Einschraubvorgang erleichtert ist.

## Patentansprüche

1. Gewindefurchende Schraube (1), bestehend aus einem niedrigfesten Nichteisenwerkstoff, mit einem Schraubenkörper (3), der zumindest bereichsweise mit einer Beschichtung (5) versehen ist, **dadurch gekennzeichnet, dass** die Beschichtung (5) aus einem mit Füllstoffen angereicherten Elastomer- oder Polymerwerkstoff gebildet ist.

2. Schraube nach Anspruch 1, **dadurch gekennzeichnet, dass** der Schraubenkörper (3) einen trilobularen Querschnitt aufweist.

3. Schraube nach Anspruch 1 oder 2, **dadurch gekennzeichnet, dass** der Schraubenwerkstoff Aluminium oder Magnesium oder eine Legierung einer dieser Werkstoffe ist.

4. Schraube nach einem der Ansprüche 1 bis 3, **dadurch gekennzeichnet, dass** die Beschichtung (5) eine geringere Härte aufweist, als der Schraubenwerkstoff.

5. Schraube nach einem der vorgenannten Ansprüche, **dadurch gekennzeichnet, dass** die Beschichtung (5) aus einem Nanokompositwerkstoff gebildet ist.

6. Schraube nach Anspruch 5, **dadurch gekennzeichnet, dass** der Nanokompositwerkstoff ein Acrylat- oder Silikat-Kompositwerkstoff ist.

## Claims

1. Self-tapping screw (1) consisting of a low-strength non-ferrous material, having a screw body (3) that is provided with a coating (5), at least on some regions, **characterized in that** the coating (5) is formed from an elastomer or polymer material enriched with fillers.

2. Screw according to claim 1, **characterized in that** the screw body (3) has a trilobular cross-section.

3. Screw according to claim 1 or 2, **characterized in that** the screw material is aluminum or magnesium or an alloy of one of these materials.

4. Screw according to one of claims 1 to 3, **characterized in that** the coating (5) has a lesser hardness than the screw material.

5. Screw according to one of the preceding claims, **characterized in that** the coating (5) is formed from a nanocomposite material.

6. Screw according to claim 5, **characterized in that** the nanocomposite material is an acrylate or silicate composite material.

## Revendications

1. Vis auto-taraudeuse (1) fabriquée à partir d'un matériau non-ferreux de faible résistance, comprenant un corps de vis (3) couvert au moins en partie d'un revêtement (5), **caractérisée en ce que** le revêtement (5) est constitué d'un matériau élastomère ou polymère enrichi d'agents de remplissage.

2. Vis selon la revendication 1 **caractérisée en ce que** le corps de vis (3) présente une section trilobée.

3. Vis selon la revendication 1 ou 2 **caractérisée en ce que** le matériau constituant la vis est l'aluminium, le magnésium ou un alliage de l'un de ces deux matériaux.

4. Vis selon l'une des revendications 1 à 3 **caractérisée en ce que** le revêtement (5) présente une dureté inférieure à celle du matériau constituant la vis.

5. Vis selon l'une des revendications précédentes **caractérisée en ce que** le revêtement (5) est constitué d'un matériau nano-composite.

6. Vis selon la revendication 5 **caractérisée en ce que** le matériau nano-composite est un matériau composite à base d'acrylate ou de silicate.
